# EUROPÄISCHE PATENTSCHRIFT

(11) **EP 4 377 582 B1**
(45) Veröffentlichungstag und Bekanntmachung des Hinweises auf die Patenterteilung: **24.12.2025**
(21) Anmeldenummer: 21752532.8
(22) Anmeldetag: 30.07.2021
(51) Int. Cl.: F16D 1/08, F16D 1/116, F16D 3/40, B62D 1/20

(54) **GELENKKOPF, KREUZGELENK, LENKWELLE UND LENKSYSTEM FÜR EIN KRAFTFAHRZEUG**
JOINT YOKE, UNIVERSAL JOINT, STEERING SHAFT AND STEERING SYSTEM FOR A MOTOR VEHICLE
FOURCHETTE D'ARTICULATION, JOINT DE CARDAN, ARBRE DE DIRECTION ET SYSTÈME DE DIRECTION POUR UN VÉHICULE AUTOMOBILE

(43) Veröffentlichungstag der Anmeldung: 05.06.2024
(73) Patentinhaber: thyssenkrupp Presta AG, 9492 Eschen (LI); thyssenkrupp AG, 45143 Essen (DE)
(72) Erfinder: MEIDERT, Markus, 9493 Mauren (LI); THUMSER, Rayk Steffen, 9479 Oberschan (CH); SALZER, Jan, 7000 Chur (CH)
(74) Vertreter: thyssenkrupp Intellectual Property GmbH
(86) Internationale Anmeldenummer: PCT/EP2021/071381
(87) Internationale Veröffentlichungsnummer: WO 2023/006214

(56) Entgegenhaltungen:
- FR-A- 1 584 420
- FR-A- 1 591 677
- FR-A5- 2 067 783
- GB-A- 2 072 801
- JP-A- H10 141 385
- US-A1- 2007 163 059
- US-A1- 2020 116 182

## Beschreibung

### Stand der Technik

Die Erfindung betrifft einen Gelenkkopf, umfassend eine Gelenkgabel mit zwei bezüglich einer Achse gegenüberliegenden Armen, die axial von einem Anbindungsabschnitt abstehen, der eine axial durchgehende Durchgangsöffnung aufweist, und der zwei in Umfangsrichtung beabstandete Klemmschlitze und ein Spannmittel aufweist, wobei die Klemmschlitze sich jeweils in einer Schlitzrichtung erstrecken und quer dazu eine offene Schlitzbreite haben, und das Spannmittel ausgebildet ist, um beim Verspannen eine auf eine Verringerung der Schlitzbreite gerichtete Spannkraft auf die Schlitze auszuüben, wobei die Klemmschlitze sich von einer Schlitzöffnung bis zu einem Schlitzboden erstrecken, und eine Brücke mäanderförmig zwischen den Klemmschlitzen angeordnet ist, so dass das eine Ende der Brücke mit dem Bodenabschnitt des einen Klemmschlitzes in Umfangsrichtung verbunden ist, und das andere Ende der Brücke mit dem Bodenabschnitt des anderen Klemmschlitzes in der entgegengesetzten Umfangsrichtung verbunden ist. Ein Kreuzgelenk, eine Lenkwelle und ein Lenksystem für ein Kraftfahrzeug, jeweils umfassend einen derartigen Gelenkkopf, sind ebenfalls Gegenstand der Erfindung.

In einem Kraftfahrzeug-Lenksystem dient die Lenkwelle zur Übertragung des in das Lenkrad eingebrachten Lenkmoments über die Lenkspindel und die Lenkwelle in das Lenkgetriebe, üblicherweise über eine Zwischenwelle. Zum Ausgleich von Winkelversatz sind im Verlauf der Lenkwelle mindestens ein, in der Regel zwei Kreuzgelenke eingegliedert, üblicherweise zwischen Lenkspindel und Zwischenwelle sowie zwischen Zwischenwelle und Lenkgetriebe.

Im Grundaufbau weist jedes Kreuzgelenk zwei jeweils an einem Wellenende angebrachte Gelenkgabeln auf, welche jeweils zwei axial in Wellenrichtung erstreckte, einander quer zur Wellenachse gegenüberliegende Arme haben. Ein Gelenkkreuz weist zwei Paare von entgegengesetzt radial vorstehenden Gelenkzapfen, kurz als Zapfen bezeichnet, auf, die auf rechtwinklig gekreuzten Zapfenachsen angeordnet sind. Die beiden Zapfen eines Paars sind jeweils in den Armen einer Gelenkgabel in Zapfenlagern drehbar um ihre Zapfenachse gelagert, die sich quer zur Wellenachse durch die Arme erstreckt. Die Zapfenlager können als Radialwälzlager ausgebildet sein, üblicherweise als Nadellager.

Ein Gelenkkopf weist einen Anbindungsabschnitt auf, der gleichbedeutend auch als Gabelbasis bezeichnet wird, an dem die Arme bevorzugt einstückig an einem Formteil ausgebildet sind, beispielsweise an einem Stahl-Umformteil. Der Anbindungsabschnitt weist eine axiale Durchgangsöffnung auf, in der ein Befestigungsabschnitt am Ende der Lenkwelle aufgenommen und festgelegt ist.

Zur Verspannung auf der Lenkwelle ist der Anbindungsabschnitt im Bereich der Durchgangsöffnung geschlitzt ausgebildet, wie dies im Stand der Technik beispielsweise aus der DE 2244412 B bekannt ist. Dabei sind zwei in einer Schlitzrichtung erstreckte Klemmschlitze in Umfangsrichtung beabstandet in den Umfang der Durchgangsöffnung eingebracht. Durch ein Spannmittel, beispielsweise einen Spannbolzen oder eine Spannschraube, welches in Umfangsrichtung, quer zur Schlitzrichtung den gegenüberliegenden, um die Schlitzbreite zueinander beabstandeten Schlitzrändern angreift, kann eine Spannkraft ausgeübt werden, mit der die Schlitzränder gegeneinander belastet werden. Dadurch, dass die Spannkraft auf eine Verringerung der Schlitzbreite gerichtet ist, wird der Innenquerschnitt der Durchgangsöffnung verengt und auf der Lenkwelle kraftschlüssig verspannt. Der Kraftschluss ist zumindest axial wirksam, wobei eine drehmomentschlüssige Verbindung durch einen korrespondierenden unrunden Querschnitt der Lenkwelle und der Durchgangsöffnung erzeugt werden kann.

In der genannten DE 2244412 B gehen die beiden Klemmschlitze in ihrer axialen Schlitzrichtung über die gesamte Länge der Durchgangsöffnung durch. Durch die im Betrieb auftretenden Drehmomente und Querlasten können axiale Schubkräfte im Bereich der Klemmschlitze wirken, welche eine Scherbelastung in Schlitzrichtung auf die gegenüberliegenden Schlitzränder der Klemmschlitze ausüben. Daraus resultiert eine relativ hohe Scher- bzw. Biegebelastung der Spannmittel, die entsprechend groß dimensioniert werden müssen, um eine Verwindung des Anbindungsabschnitts und eine Verformung der Gelenkgabel möglichst zu vermeiden.

Ein Gelenkkopf der eingangs genannten Art ist aus der JP H10141 385 A bekannt. Dieser erfordert eine aufwendige Fertigung und Montage.

Angesichts der vorangehend erläuterten Problematik ist es eine Aufgabe der vorliegenden Erfindung, eine verbesserte, verwindungssteifere Anbindung des Gelenkkopfes zu ermöglichen.

### Darstellung der Erfindung

Diese Aufgabe wird erfindungsgemäß gelöst durch die Gelenkgabel mit den Merkmalen des Anspruchs 1, das Kreuzgelenk gemäß Anspruch 7 die Lenkwelle gemäß Anspruch 8, und das Lenksystem gemäß Anspruch 9. Vorteilhafte Weiterbildungen ergeben sich aus den Unteransprüchen.

Bei einem Gelenkkopf, umfassend eine Gelenkgabel mit zwei bezüglich einer Achse gegenüberliegenden Armen, die axial von einem Anbindungsabschnitt abstehen, der eine axial durchgehende Durchgangsöffnung aufweist, und der zwei in Umfangsrichtung beabstandete Klemmschlitze und ein Spannmittel aufweist, wobei die Klemmschlitze sich jeweils in einer Schlitzrichtung erstrecken und quer dazu eine offene Schlitzbreite haben, und das Spannmittel ausgebildet ist, um beim Verspannen eine auf eine Verringerung der Schlitzbreite gerichtete Spannkraft auf die Schlitze auszuüben, wobei die Klemmschlitze sich von einer Schlitzöffnung bis zu einem Schlitzboden erstrecken, und eine Brücke mäanderförmig zwischen den Klemmschlitzen angeordnet ist, so dass das eine Ende der Brücke mit dem Bodenabschnitt des einen Klemmschlitzes in Umfangs-richtung verbunden ist, und das andere Ende der Brücke mit dem Bodenabschnitt des anderen Klemmschlitzes in der entgegengesetzten Umfangsrichtung verbunden ist. ist erfindungsgemäß vorgesehen, dass das Spannmittel sich in Umfangsrichtung über beide Klemmschlitze und die Brücke erstreckt.

Die zwei Klemmschlitze sind als geschlossene Schlitze ausgebildet, die eine definierte Schlitzlänge gemessen von der Schlitzöffnung bis zum Schlitzboden haben. Mit anderen Worten sind die geschlossenen Schlitze sackgassenförmig ausgebildet. Die Schlitzlänge ist so bemessen, dass zwischen dem Schlitzboden und der äußeren Begrenzung des Anbindungsabschnitts, die der Schlitzöffnung abgewandt ist, ein in Umfangsrichtung geschlossener Umfangsbereich stehen bleibt, der im Folgenden als Bodenbereich oder Bodenabschnitt bezeichnet wird. Im Gegensatz zum Stand der Technik ist folglich kein über die Länge der Durchgangsöffnung durchgehender, die axiale Schubsteifigkeit schwächender Klemmschlitz vorhanden. Daraus resultiert eine höhere Schub- und Verwindungssteifigkeit.

Die Länge des jeweiligen Klemmschlitzes ist geringer als die Länge der Durchgangsöffnung. Die beiden Klemmschlitze sind erfindungsgemäß mit entgegengesetzt orientierten Schlitzrichtungen in den die Wandung der Durchgangsöffnung bildenden Umfang des Anbindungsabschnitts eingebracht, und sind bevorzugt antiparallel angeordnet. In Umfangsrichtung gesehen überlappen sich die beiden Klemmschlitze. Dadurch wird eine zur Verspannung über die gesamte Länge der Durchgangsöffnung ausreichende Druckweichheit in Umfangsrichtung realisiert, also eine geringere Drucksteifigkeit in Richtung der von dem Spannmittel ausübbaren Spannkraft.

Bevorzugt ist die Summe der Längen der Klemmschlitze größer als die einfache Länge der Durchgangsöffnung, besonders bevorzugt ist die Summe der Längen der Klemmschlitze zwischen den 1,2 fachen bis 1,8 fachen der Länge der Durchgangsöffnung.

Die erfindungsgemäße Brücke, die gleichbedeutend auch als Verbindungssteg bezeichnet wird, bildet eine über den Umfang geschlossene Verbindung der die Klemmschlitze begrenzenden Umfangsbereiche. Dadurch können im Betrieb zwischen den Rändern der Klemmschlitze anstehende Schubkräfte von der Brücke aufgenommen und axial abgestützt werden, wodurch die Schubsteifigkeit in vorteilhafter Weise gegenüber den durchgehenden Klemmschlitzen im Stand der Technik erhöht wird.

Die Brücke kann als relativ schmaler Verbindungssteg ausgebildet sein, mit einer Stegbreite, der Brückenbreite, gemessen in Umfangsrichtung, die vorzugsweise in etwa der Schlitzbreite eines Klemmschlitzes entspricht. Zwischen den Klemmschlitzen ist die Brücke mäanderförmig angeordnet. Damit ist gemeint, dass das eine Ende der Brücke mit dem Bodenabschnitt des einen Klemmschlitzes in Umfangsrichtung verbunden ist, und das andere Ende der Brücke mit dem Bodenabschnitt des anderen Klemmschlitzes in der entgegengesetzten Umfangsrichtung verbunden ist, und sich die Brücke zwischen den beiden Enden zumindest abschnittweise quer zur Umfangsrichtung erstreckt. Entsprechend verläuft die Brücke im Wesentlichen parallel zur Schlitzrichtung zwischen den Klemmschlitzen. Dadurch begrenzt die Brücke mit ihrer einen Seite den einen Klemmschlitz, also weist einen Schlitzrand auf, und mit ihrer anderen Seite den anderen Klemmschlitz, und weist den einen Schlitzrand dieses anderen Klemmschlitzes auf.

Die definitionsgemäße mäanderförmige Anordnung kann gleichbedeutend auch als Z-förmig oder doppelt gestufte Anordnung bezeichnet werden. Wesentlich ist dabei der zumindest abschnittweise Verlauf in Schlitzrichtung zwischen den Klemmschlitzen, und die in Umfangsrichtung gegenüberliegenden, und quer dazu versetzten Anbindungsabschnitte der Brücke im Bereich der Bodenabschnitte der beiden relativ zur Brücke benachbart angeordneten Klemmschlitze. Anders ausgedrückt ist die Brücke relativ zu ihrem Verlauf in Schlitzrichtung an ihren in entgegengesetzte Umfangsrichtungen abgewinkelt, wodurch die mäander- oder Z-förmige Anordnung zustande kommt.

Die Brücke kann zwischen den Bodenbereichen der Klemmschlitze anstehende axial Schubspannungen sicher aufnehmen und abstützen. Dabei kann durch einen relativ schmalen Querschnitt, eine langgestreckte Form der Brücke und durch den Verlauf der Brücke quer zur Umfangsrichtung eine relativ geringe Biegesteifigkeit erzeugt werden. Auf diese Weise kann sichergestellt werden, dass die durch die Brücke bereitgestellte, axial drucksteife Verbindung zwischen den Klemmschlitzen relativ druckweich in Umfangsrichtung ist, und entsprechend der beim Verspannen ausgeübten Spannkraft nur in vernachlässigbar geringem Maße entgegenwirkt.

Erfindungsgemäß ist vorgesehen, dass das Spannmittel sich in Umfangsrichtung über beide Klemmschlitze und die Brücke erstreckt. Durch das Spannmittel werden die Klemmschlitz gegen die dazwischen angeordnete Brücke zusammengepresst. Die von der Brücke aus gesehen in Umfangsrichtung außen liegenden Schlitzränder werden mit der Spannkraft gegen die an der Brücke ausgebildeten, innen liegenden Schlitzränder belastet. Dadurch, dass die beiden Klemmschlitze bezüglich der Spannrichtung, in der die Spannkraft ausgeübt wird, mit ihrer Schlitzbreite in Serie nebeneinander liegen, wirkt die gleiche Spannkraft auf jeden der Klemmschlitze in Richtung einer Verringerung der Schlitzbreite, so dass eine gleichmäßige Verspannung beider Schlitze gewährleistet ist. Es kann eine vorteilhaft kompakte, zuverlässige und montagefreundliche Anordnung realisiert werden.

Eine vorteilhafte Ausführung kann vorsehen, dass die beiden Klemmschlitze axial gegeneinander gerichtet sind. Dies kann dadurch realisiert sein, dass die beiden Klemmschlitze von den beiden axialen Stirnseiten in den Anbindungsabschnitt eingebracht sind, wobei die Schlitzöffnung des einen Klemmschlitzes in der einen axialen Stirnseite des Anbindungsabschnitts ausgebildet ist, und entsprechend die Schlitzöffnung des anderen Klemmschlitzes in der anderen, axial gegenüberliegenden Stirnseite. Die Klemmschlitze erstrecken sich axial, d.h. die Schlitzrichtung oder zumindest eine Komponente der Schlitzrichtung verläuft im Wesentlichen parallel zur Achse. Die Brücke erstreckt sich zwischen den Klemmschlitzen axial, mit mindestens einer Axialkomponente, also quer zur Umfangsrichtung, und verläuft dabei vom Schlitzboden des einen Klemmschlitzes zum Schlitzboden des anderen Klemmschlitzes hin. Die Klemmschlitze erstrecken sich zusammen gesehen über die gesamte Länge der Durchgangsöffnung, wobei sie sich im mittleren Bereich in Umfangsrichtung gesehen überlappen. Dadurch kann der die Brücke bildende Verbindungssteg relativ lang sein, und die Anordnung kann in Umfangsrichtung in vorteilhafter Weise druckweich ausgestaltet sein. Sofern im Rahmen der Darstellung der Erfindung die Rede von "druckweich" ist, ist damit die reduzierte Steifigkeit gemeint und nicht die Härte des Werkstoffes. Durch den axialen Verlauf kann die Brücke gut Schubspannungen abstützen, wodurch eine vorteilhaft hohe Schubsteifigkeit realisiert werden kann. Die Einbringung der Schlitze in die entgegengesetzten axialen Stirnseiten den Anbindungsabschnitt kann vorteilhaft mit geringem Aufwand erfolgen.

Es kann vorteilhaft sein, dass die beiden Klemmschlitze radial, sprich orthogonal zur axialen Richtung, gegeneinander gerichtet sind.

Bei dieser Anordnung geht der eine Klemmschlitz von der Durchgangsöffnung radial nach außen und wird daher auch als innerer Klemmschlitz bezeichnet, wobei die Schlitzöffnung in der Innenwandung der Durchgangsöffnung liegt. Der andere, äußere Klemmschlitz ist mit seiner Schlitzrichtung gegen den ersten Klemmschlitz radial nach innen, auf die Achse zu, gerichtet, in den Anbindungsabschnitt eingebracht. Die Schlitzlänge jedes der beiden Klemmschlitze ist kleiner als die lokale radiale Wandungsdicke der Durchgangsöffnung, und so bemessen, dass sich die beiden Klemmschlitze sich in Umfangsrichtung gesehen überlappen. Die Brücke erstreckt sich zwischen den Klemmschlitzen in radialer Richtung, quer zur Umfangsrichtung, vom Schlitzboden des einen Klemmschlitzes zum Schlitzboden des anderen Klemmschlitzes. Dadurch, dass sich in dieser Ausführung die Breite der Brücke in axialer Richtung erstreckt, und die Anbindung im Bereich der Bodenabschnitte der beiden relativ zur Brücke benachbart angeordneten Klemmschlitze über die gesamte Länge der Durchgangsöffnung erfolgen kann, ist eine vorteilhaft hohe Schubsteifigkeit erreichbar. Durch eine relativ dünne Ausgestaltung der Brücke, in Umfangsrichtung gemessen, kann eine geringe Drucksteifigkeit vorgegeben werden.

In einer vorteilhaften Weiterbildung kann es vorgesehen sein, dass der jeweilige Bodenabschnitt der Klemmschlitze gewölbt oder rund ausgebildet ist, bevorzugt einen Radius aufweist. Dies bietet den Vorteil, dass Kerbwirkungen reduziert werden. Weiters kann dadurch die Fertigung vereinfacht werden, da beispielsweise ein mittels Zerspanungsmittel eingebrachter Klemmschlitz einen runden Bodenabschnitt ohne Zutun aufweist. Dieser runde Bodenabschnitt ergibt sich aus dem Durchmesser des Zerspanungsmittels wie einen Fräser oder einer Schneidscheibe.

Es ist auch denkbar und möglich, dass die beiden Klemmschlitze schräg gegeneinander gerichtet sind, mit einer Schlitzrichtung, die relativ zu einer rein radialen oder axialen Anordnung geneigt ist. Entsprechend kann die Brücke schräg relativ zur Radial- und Axialrichtung verlaufen.

Vorzugsweise verlaufen die Klemmschlitze entgegengesetzt parallel. Es ist jedoch auch eine entgegengesetzte Anordnung denkbar und möglich, die von einer parallelen Anordnung abweicht, beispielsweise um bestimmte Verformungseigenschaften zu optimieren.

Es kann vorgesehen sein, dass das Spannmittel einen Schraubbolzen, einen Spannbolzen oder dergleichen aufweist. Ein Schraubbolzen kann durch eine Bohrung in Umfangsrichtung über beide Klemmschlitze und die Brücke durchgehend in den Anbindungsabschnitt eingeschraubt sein, bevorzugt in ein darin eingeschnittenes Gewinde. Die Spannkraft, wie an sich bekannt, einfach durch Einschrauben mit einem vorgegebenen Anzugsmoment erzeugt werden. Es kann eine vorteilhaft kompakte und zuverlässige Verspannung erzeugt werden.

Alternativ kann es auch vorgesehen sein, dass der Schraubbolzen in eine Mutter verschraubt ist und somit kein eingeschnittenes Gewinde erforderlich ist. Es kann auch ein Schraubbolzen vorgesehen sein, der selbstschneidend ausgebildet ist und sich beim Verspannen selbst in das Material des Anbindungsabschnitts einschneidet. Dadurch kann der Fertigungsaufwand reduziert werden.

Es ist möglich, dass der Anbindungsabschnitt im Bereich der Klemmschlitze eine vergrößerte Wandungsstärke aufweist. Die in radialer Richtung gemessene Wandungsstärke kann im Bereich der Klemmschlitze und der Brücke vergrößert sein, um ein Art Spannblock auszubilden, der die Klemmschlitze und die Brücke umfasst. Durch eine vergrößerte Wandungsstärke kann in vorteilhafter Weise die Schubsteifigkeit erhöht werden, und die konstruktive Freiheit bei der Ausgestaltung der Klemmschlitze und der Brücke wird vergrößert.

Es kann vorgesehen sein, dass die Durchgangsöffnung einen unrunden Öffnungsquerschnitt hat. Der unrunde Öffnungsquerschnitt kann beispielsweise abgeflacht oder mehreckig sein oder eine Verzahnung oder ein anderes formschlüssiges Profil aufweisen, und korrespondiert mit dem Querschnitt der Lenkwelle. Dadurch kann eine sichere und belastbare formschlüssige Drehmomentübertragung realisiert sein.

Die Gelenkgabel kann einschließlich Anbindungsabschnitt und Armen bevorzugt als einstückiges Formteil ausgebildet sein, vorzugsweise als Umformteil aus einem metallischen Werkstoff, besonders bevorzugt aus Stahl, einer Aluminiumlegierung oder aus Titan. Dadurch wird eine hohe Belastbarkeit und eine rationelle Fertigung gewährleistet. Die Klemmschlitze und die Brücke können bei der spanlosen Umformung eingebracht werden, um eine optimierte Gefügestruktur zu realisieren. Zusätzlich oder alternativ kann eine spanende Bearbeitung erfolgen, um die Klemmschlitze auf Endmaß zu bringen, oder in den Anbindungsabschnitt einzubringen.

Alternativ kann die Gelenkgabel als Urformteil, bevorzugt als Gussteil ausgebildet sein. Dies bietet den Vorteil einer rationalen Fertigung.

Weiterhin umfasst die Erfindung ein Kreuzgelenk, umfassend zwei Gelenkköpfe mit zwei bezüglich einer Achse gegenüberliegenden Armen, die axial von einem Anbindungsabschnitt abstehen, ein Gelenkkreuz mit zwei rechtwinklig zueinander angeordneten Paaren von Zapfen, die in den Armen drehbar gelagert sind, bei dem erfindungsgemäß vorgesehen ist, dass zumindest einer der Gelenkköpfe gemäß zumindest einer der vorgenannten Ausführungsformen oder Kombinationen davon ausgestaltet ist. Dabei ist es vorteilhaft für eine sichere und belastbare Verbindung, dass die Anbindungsabschnitte beider Gelenkköpfe erfindungsgemäß ausgestaltet sind. Daraus resultieren die Vorteile, dass eine geringere Verwindung des Kreuzgelenks als im Stand der Technik ermöglicht wird, und eine vorteilhaft höhere Steifigkeit des Gelenks realisierbar ist, wodurch eine verbesserte Drehmomentübertragung und auch eine materialsparende, leichtere Bauweise ermöglicht wird.

Die Erfindung umfasst eine Lenkwelle für ein Kraftfahrzeug-Lenksystem, umfassend einen Wellenabschnitt, der in einer Durchgangsöffnung in einem Anbindungsabschnitt mindestens eines Gelenkkopfes drehfest festgelegt ist, wobei erfindungsgemäß vorgesehen ist, dass zumindest einer der Gelenkköpfe, bevorzugt beide Gelenkköpfe gemäß zumindest einer der vorgenannten Ausführungsformen oder Kombinationen davon ausgestaltet sind. Der erfindungsgemäße Anbindungsabschnitt ermöglicht eine optimierte Verspannung, welche eine vorteilhafte geringere Verwindung auch bei hohen Belastungen im Betrieb ermöglicht.

Die vorangehend beschriebenen Vorteile der Erfindung können bevorzugt in einem Lenksystem für ein Kraftfahrzeug realisiert sein, welches mindestens eine erfindungsgemäß ausgestaltete Lenkwelle und/oder ein erfindungsgemäßes Kreuzgelenk gemäß den vorangehend beschriebenen Ausführungen aufweist.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Kraftfahrzeug-Lenksystem in einer schematischen perspektivischen Ansicht,
- Figur 2: eine Lenkwelle des Lenksystems gemäß Figur 1 in einer schematischen perspektivischen Ansicht,
- Figur 3: einen Querschnitt durch die Lenkwelle gemäß Figur 2 im Bereich eines Gelenkkopfes,
- Figur 4: eine schematisch auseinander gezogene Teilansicht der Lenkwelle gemäß Figur 3 mit einem Gelenkkopf in einer ersten Ausführungsform,
- Figur 5: einen erfindungsgemäßen Gelenkkopf in der ersten Ausführungsform in einer Seitenansicht,
- Figur 6: einen Längsschnitt durch den Gelenkkopf gemäß Figur 5,
- Figur 7: einen erfindungsgemäßen Gelenkkopf in einer zweiten Ausführungsform in einer schematischen perspektivischen Ansicht (ähnlich Figur 4),
- Figur 8: eine Axialansicht des Gelenkkopfes gemäß Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

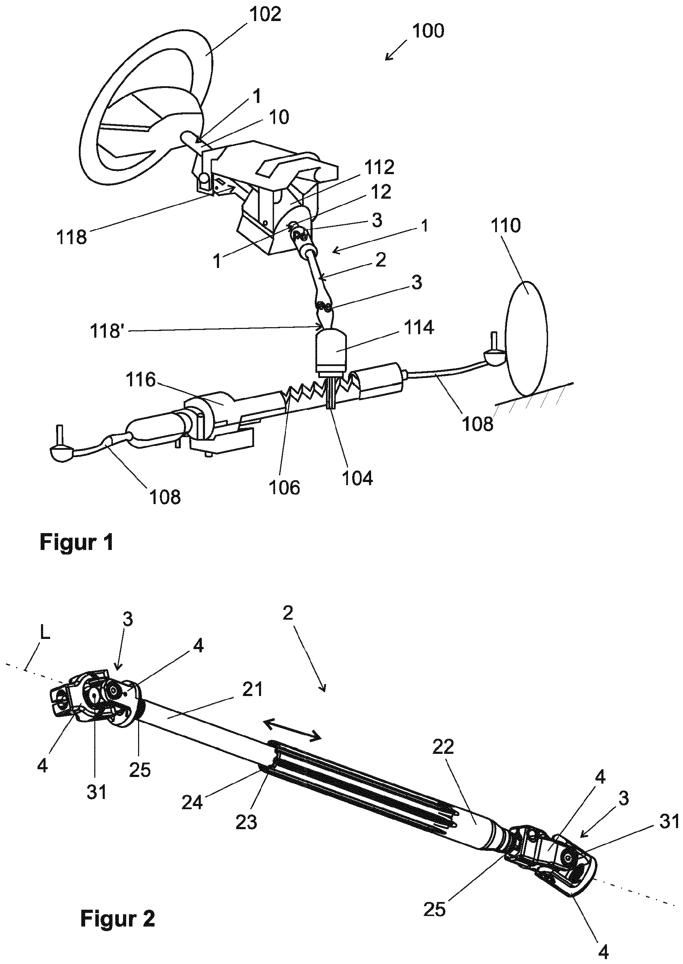

In Figur 1 ist ein als elektromechanische Hilfskraftlenkung ausgebildetes Kraftfahrzeug-Lenksystem 100 schematisch dargestellt, wobei über ein Lenkrad 102 ein manuelles Lenk-Drehmoment (Lenkmoment) als Lenkbefehl in eine Lenkwelle 1 eingebracht werden kann. Das Lenkmoment wird über die Zwischenwelle 2 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Lenkritzel 104 gekoppelten Hilfskraftunterstützung 114 und/oder einer mit der Zahnstange 106 gekoppelten Hilfskraftunterstützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombination mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetische Sensoranordnung, oder durch eine andere Messung der Relatiwerdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst die Zwischenwelle 2, die über erfindungsgemäß ausgestaltete Kreuzgelenke 3, kurz auch als Gelenke 3 bezeichnet, gelenkig mit der Ausgangswelle 112 und dem Lenkritzel 104 gekuppelt ist, so dass der Verlauf der Lenkwelle 1 im Kraftfahrzeug an die räumlichen Gegebenheiten angepasst werden kann.

Figur 2 zeigt in einer separaten Darstellung die Zwischenwelle 2, die als längenverstellbare Lenkwelle ausgebildet ist, und die sich entlang einer Achse L, der Längsachse, erstreckt.

Die Zwischenwelle 2 weist eine Innenwelle 21 und eine Außenwelle 22 auf. Die Außenwelle 22 ist rohrförmig ausgestaltet und weist eine Innenverzahnung 23 auf. Die Innenwelle 21 weist eine korrespondierende Außenverzahnung 24 auf, die zur Bildung einer formschlüssigen Drehverbindung teleskopartig in die Innenverzahnung 23 eintaucht und dadurch in Richtung der Achse L längenverstellbar ist, wie mit dem Doppelpfeil angedeutet ist.

In ihren in Längsrichtung voneinander abgewandten Endbereichen weisen die Innenwelle 21 und die Außenwelle 22 Befestigungsabschnitte 25 auf, an denen jeweils eines der Kreuzgelenke 3 festgelegt ist.

Ein Kreuzgelenk 3 umfasst jeweils zwei Gelenkköpfe 4, die in an sich bekannter Weise über ein Gelenkkreuz 31 um zwei gekreuzte Gelenkachsen aneinander angelenkt sind.

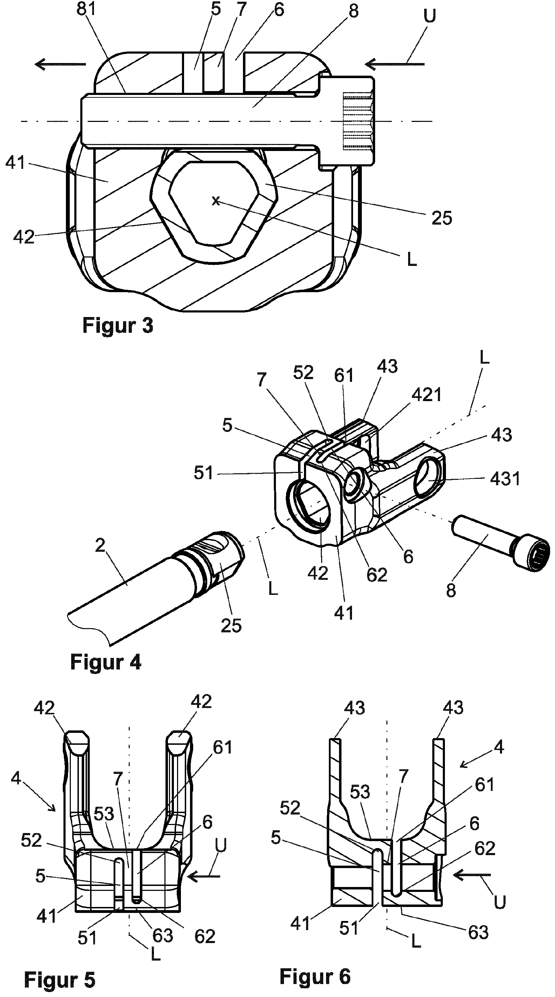

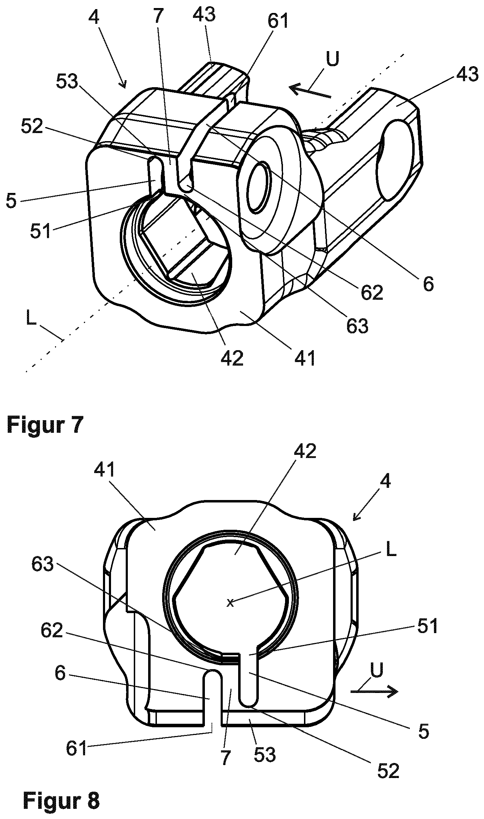

An den Befestigungsabschnitten 25 ist jeweils ein erfindungsgemäßer Gelenkkopf 4 angebracht, der in einer ersten Ausführung in den Figuren 3 bis 6, und in einer zweiten Ausführung in den Figuren 7 und 8 gezeigt ist, wobei für gleichwirkende Teile dieselben Bezugszeichen verwendet werden.

Der Gelenkkopf 4 weist einen Anbindungsabschnitt 41 auf, der auch als Gabelbasis bezeichnet wird und eine axial durchgehende Durchgangsöffnung 42 hat. Von dem Anbindungsabschnitt 41 stehen zwei einander bezüglich der Achse L gegenüberliegende Arme 43 axial ab, die jeweils eine quer zur Achse L stehende Lagerbohrung 431 zur Lagerung eines Zapfenpaars des Gelenkkreuzes 31 haben.

In dem Querschnitt von Figur 3 ist erkennbar, dass die Durchgangsöffnung 42 und der Befestigungsabschnitt 25 miteinander korrespondierende unrunde, nämlich dreikantige Querschnitte haben, so dass eine bezüglich Drehung um die Achse L formschlüssige Verbindung gebildet wird.

In die Wandung der Durchgangsöffnung 42 sind in der ersten Ausführungsform von den beiden Stirnseiten des Anbindungsabschnitts 41 ausgehend zwei Klemmschlitze 5 und 6 eingebracht, deren Schlitzrichtungen parallel zur Achse L von einer stirnseitigen Schlitzöffnung 51, 61 bis zu einem Schlitzboden 52, 62 gerichtet sind. Entsprechend sind die Schlitzrichtungen bei dieser ersten Ausführungsform axial entgegengesetzt. Oder anders ausgedrückt sind die beiden Klemmschlitze 5 und 6 antiparallel angeordnet.

Die Länge dieser geschlossenen Klemmschlitze 5 und 6, gemessen von der Schlitzöffnung 51, 61 bis um Schlitzboden 52, 62 ist kleiner als die axiale Länge der Durchgangsbohrung 42, wobei die Klemmschlitze 5 und 6 so lang sind, dass sie sich in einer quer zur Längsachse L stehenden Umfangsrichtung U überlappen. Axial zwischen den Schlitzböden 52, 62 und der Stirnseite befindet sich ein geschlossener Bodenabschnitt 53, 63.

Parallel zwischen den Klemmschlitzen 5 und 8 ist eine Brücke 7 ausgebildet. Diese erstreckt sich axial, und ist an ihren einen Ende in Umfangsrichtung abgewinkelt und mit dem Bodenabschnitt 53 am Schlitzboden 52 des einen Schlitzes 5 fest verbunden, und an ihrem anderen Ende in die entgegengesetzte Umfangsrichtung abgewinkelt und mit dem Bodenabschnitt 63 am Schlitzboden 62 des anderen Schlitzes 6 fest verbunden. In dem zwischen den Enden liegenden Bereich verläuft die Brücke gerade in Längsrichtung, also quer zur Umfangsrichtung U. Durch diese doppelt abgewinkelte Form ist die Brücke definitionsgemäß mäanderförmig ausgebildet und angeordnet. Gleichbedeutung könnte man die Brücke auch als Z-Förmig bezeichnen, wie in den Seitenansichten quer zur Achse L in den Figuren 5 und 6 erkennbar ist.

Die Brücke 7 weist die in Umfangsrichtung benachbarten, inneren Schlitzränder der Klemmschlitze 5 und 6 auf. Entsprechend liegen die äußeren Schlitzränder von der Brücke 7 aus gesehen nach außen abgewandt.

Ein Spannmittel in Form eines Schraubbolzens 8 durchsetzt den Anbindungsabschnitt 41 in Umfangsrichtung U im Bereich der Klemmschlitze 5 und 6, wie in Figuren 3 und 6 erkennbar ist. Durch Einschrauben in ein Innengewinde 81 werden die äußeren Schlitzränder der Klemmschlitze 5 und 6 durch den Schraubbolzen 8 mit einer Spannkraft auf eine Verringerung der Schlitzbreite zu gerichtet belastet, so dass ein Verspannen der Durchgangsöffnung 42 auf dem Befestigungsabschnitt 25 erfolgt.

Durch die verglichen mit der Schlitzbreite relativ große axiale Länge der die Klemmschlitze 5 und 6 mäanderförmig überbrückenden Brücke 7 wird eine in Umfangsrichtung druckweiche Anordnung gebildet, welche der beim Verspannen ausgeübten Spannkraft nur eine geringe Rückstellkraft entgegensetzt. Durch die feste Fixierung an den Bodenabschnitten 53 und 63 stützt die Brücke 7 die Klemmschlitze 5 und 6 axial gegeneinander ab. Dadurch kann die Brücke 7 axiale Schubspannungen aufnehmen und abstützen, wodurch die Schubsteifigkeit des Gelenkkopfes 4 gegenüber den axial durchgehenden Klemmschlitzen im Stand der Technik wirksam erhöht wird, und entsprechend potentiell schädliche Verwindungen reduziert werden.

Die Breite der Brücke 7 (Brückenbreite) entspricht in etwa der Schlitzbreite der Klemmschlitze 5 und 6, jeweils in Umfangsrichtung gemessen.

Vom Wirkprinzip ist die in den Figuren 7 und 8 gezeigte zweite Ausführungsform eines erfindungsgemäßen Gelenkkopfes 4 prinzipiell gleich. Ein Unterschied ist, dass die beiden Klemmschlitze 5 und 6 nicht axial, sondern radial eingebracht sind. Der erste Klemmschlitz 5 erstreckt sich von einer in der Durchgangsöffnung 42 angeordneten Schlitzöffnung 51 radial nach außen, und der zweite Klemmschlitz 6 antiparallel dazu von außen radial nach innen. In Figur 8 ist wiederum die mäanderförmig zwischen den Klemmschlitzen 5 und 6 angeordnete Brücke 7 erkennbar.

Die Breite der Brücke 7 (Brückenbreite) entspricht in etwa der Schlitzbreite der Klemmschlitze 5 und 6, jeweils in Umfangsrichtung gemessen.

Die Verspannung erfolgt wie oben zu den Figuren 3 bis 6 beschrieben durch Einschrauben der Spannschraube 8.

Die Wandungsstärke der Durchgangsöffnung 42 ist in allen gezeigten Ausführungen im Umfangsbereich der Klemmschlitze 5 und 6 sowie der Brücke größer als im übrigen Umfang. Dadurch kann die Schub- und Verwindungssteifigkeit weiter erhöht werden.

In sämtlichen gezeigten Ausführungsformen kann der Gelenkkopf 4 bevorzugt einstückig ausgebildet sein, beispielsweise als Form- oder Pressteil, bevorzugt aus Stahl.

### Bezugszeichenliste

- 1: Lenkwelle
- 10: Eingangswelle
- 12: Ausgangswelle
- 100: Lenksystem
- 102: Lenkrad
- 103: Lenkgetriebe
- 104: Lenkritzel
- 106: Zahnstange
- 108: Spurstange
- 110: Rad
- 112: Hilfskraftunterstützung
- 114: Hilfskraftunterstützung
- 116: Hilfskraftunterstützung
- 118: Drehmomentsensor
- 2: Zwischenwelle
- 21: Innenwelle
- 22: Außenwelle
- 23: Innenverzahnung
- 24: Außenverzahnung
- 25: Befestigungsabschnitt
- 3: Kreuzgelenk (Gelenk)
- 31: Gelenkkreuz
- 4: Gelenkkopf
- 41: Anbindungsabschnitt (Gabelbasis)
- 42: Durchgangsöffnung
- 43: Arm
- 431: Lagerbohrung
- 5,6: Klemmschlitz
- 51, 62: Schlitzboden
- 52, 62: Schlitzboden
- 53, 63: Bodenabschnitt
- 7: Brücke
- 8: Spannschraube
- 81: Innengewinde

- L: Achse (Längsachse)
- U: Umfangsrichtung

## Patentansprüche

1. Gelenkkopf (4), umfassend eine Gelenkgabel mit zwei bezüglich einer Achse (L) gegenüberliegenden Armen (43), die axial von einem Anbindungsabschnitt (41) abstehen, der eine axial durchgehende Durchgangsöffnung (42) aufweist, und der zwei in Umfangsrichtung beabstandete Klemmschlitze (5, 6) und ein Spannmittel (8) aufweist, wobei die Klemmschlitze (5, 6) sich jeweils in einer Schlitzrichtung erstrecken und quer dazu eine offene Schlitzbreite haben, und das Spannmittel (8) ausgebildet ist, um beim Verspannen eine auf eine Verringerung der Schlitzbreite gerichtete Spannkraft auf die Schlitze (5, 6) auszuüben,
wobei die Klemmschlitze (5, 6) sich von einer Schlitzöffnung (51, 61) bis zu einem Schlitzboden (52, 62) erstrecken, und
eine Brücke (7) mäanderförmig zwischen den Klemmschlitzen (5, 6) angeordnet ist, so dass das eine Ende der Brücke (7) mit dem Bodenabschnitt (53) des einen Klemmschlitzes (5) in Umfangsrichtung verbunden ist, und das andere Ende der Brücke (7) mit dem Bodenabschnitt (63) des anderen Klemmschlitzes (6) in der entgegengesetzten Umfangsrichtung verbunden ist,
**dadurch gekennzeichnet,**
**dass** das Spannmittel (8) sich in Umfangsrichtung über beide Klemmschlitze (5, 6) und die Brücke (7) erstreckt.

2. Gelenkkopf nach Anspruch 1, **dadurch gekennzeichnet, dass** die beiden Klemmschlitze (5, 6) axial gegeneinander gerichtet sind.

3. Gelenkkopf nach einem der vorangehenden Ansprüche, **dadurch gekennzeichnet, dass** die beiden Klemmschlitze (5, 6) radial gegeneinander gerichtet sind.

4. Gelenkkopf nach einem der vorangehenden Ansprüche, **dadurch gekennzeichnet, dass** das Spannmittel (8) einen Schraubbolzen (8) aufweist.

5. Gelenkkopf nach einem der vorangehenden Ansprüche, **dadurch gekennzeichnet, dass** der Anbindungsabschnitt (41) im Bereich der Klemmschlitze (5, 6) eine vergrößerte Wandungsstärke aufweist.

6. Gelenkkopf nach einem der vorangehenden Ansprüche, **dadurch gekennzeichnet, dass** die Durchgangsöffnung (42) einen unrunden Öffnungsquerschnitt hat.

7. Kreuzgelenk, umfassend zwei Gelenkköpfe (4) mit zwei bezüglich einer Achse (L) gegenüberliegenden Armen (43), die axial von einem Anbindungsabschnitt (41) abstehen, ein Gelenkkreuz (31) mit zwei rechtwinklig zueinander angeordneten Paaren von Zapfen, die in den Armen (43) drehbar gelagert sind,
**dadurch gekennzeichnet,**
**dass** zumindest einer der Gelenkköpfe (4) nach einem der vorangehenden Ansprüche ausgebildet ist.

8. Lenkwelle (1) für ein Kraftfahrzeug-Lenksystem (100) , umfassend einen Wellenabschnitt (2), der in einer Durchgangsöffnung (42) in einem Anbindungsabschnitt (41) mindestens eines Gelenkkopfes (4) drehfest festgelegt ist,
**dadurch gekennzeichnet,**
**dass** der Gelenkkopf (4) nach einem der vorangehenden Ansprüche 1 bis 6 ausgebildet ist.

9. Lenksystem (100) für ein Kraftfahrzeug, umfassend mindestens ein Kreuzgelenk (3) nach Anspruch 7 und/oder eine Lenkwelle (1) nach Anspruch 8.

## Claims

1. A joint head (4) comprising a joint fork with two arms (43) which are opposite one another with respect to an axis (L) and which project axially from a connecting portion (41) which has an axially continuous through-opening (42) and which has two clamping slots (5, 6) spaced apart in the circumferential direction and a clamping means (8), wherein the clamping slots (5, 6) each extend in a slot direction and have an open slot width transversely thereto, and the clamping means (8) is designed to exert a clamping force on the slots (5, 6) directed towards a reduction in the slot width during clamping,
wherein the clamping slots (5, 6) extend from a slot opening (51, 61) to a slot bottom (52, 62), and
a bridge (7) is arranged in a meandering manner between the clamping slots (5, 6), so that the one end of the bridge (7) is connected to the bottom section (53) of one clamping slot (5) in the circumferential direction, and the other end of the bridge (7) is connected to the bottom section (63) of the other clamping slot (6) in the opposite circumferential direction ,
**characterized in**
**in that** the clamping means (8) extends in the circumferential direction over both clamping slots (5, 6) and the bridge (7) .

2. Joint head according to claim 1, **characterized in that** the two clamping slots (5, 6) are directed axially towards each other.

3. Joint head according to one of the preceding claims, **characterized in that** the two clamping slots (5, 6) are directed radially towards each other.

4. Joint head according to one of the preceding claims, **characterized in that** the clamping means (8) has a screw bolt (8).

5. Joint head according to one of the preceding claims, **characterized in that** the connecting section (41) has an enlarged wall thickness in the region of the clamping slots (5, 6).

6. Joint head according to one of the preceding claims, **characterized in that** the through-opening (42) has a non-circular opening cross-section.

7. Universal joint, comprising two joint heads (4) with two arms (43) which are opposite one another with respect to an axis (L) and which project axially from a connecting section (41), a joint cross (31) with two pairs of pins which are arranged at right angles to one another and which are rotatably mounted in the arms (43),
**characterized in**
**in that** at least one of the rod ends (4) is designed according to one of the preceding claims.

8. Steering shaft (1) for a motor vehicle steering system (100), comprising a shaft section (2) which is fixed in a through opening (42) in a connecting section (41) of at least one rod end (4) in a rotationally fixed manner,
**characterized in**
**in that** the rod end (4) is designed according to one of the preceding claims 1 to 6.

9. Steering system (100) for a motor vehicle, comprising at least one universal joint (3) according to claim 7 and/or a steering shaft (1) according to claim 8.

## Revendications

1. Tête d'articulation (4) comprenant une fourche d'articulation avec deux bras (43) opposés par rapport à un axe (L), qui dépassent axialement d'une section de liaison (41), qui présente une ouverture de passage (42) continue axialement, et qui présente deux fentes de serrage (5, 6) espacées dans la direction périphérique et un moyen de serrage (8), les fentes de serrage (5, 6) s'étendant chacune dans une direction de fente et ayant transversalement à celle-ci une largeur de fente ouverte, et le moyen de serrage (8) étant conçu pour exercer sur les fentes (5, 6), lors du serrage, une force de serrage orientée vers une réduction de la largeur de fente,
les fentes de serrage (5, 6) s'étendant depuis une ouverture de fente (51, 61) jusqu'à un fond de fente (52, 62), et
un pont (7) est disposé en méandres entre les fentes de serrage (5, 6) de sorte que l'extrémité du pont (7) est reliée à la partie de fond (53) de l'une des fentes de serrage (5) dans la direction circonférentielle, et l'autre extrémité du pont (7) est reliée à la partie de fond (63) de l'autre fente de serrage (6) dans la direction circonférentielle opposée ,
**caractérisé en ce que**
**en ce que** le moyen de serrage (8) s'étend dans la direction circonférentielle sur les deux fentes de serrage (5, 6) et le pont (7) .

2. Tête d'articulation selon la revendication 1, **caractérisée en ce que** les deux fentes de serrage (5, 6) sont orientées axialement l'une vers l'autre.

3. Tête d'articulation selon l'une des revendications précédentes, **caractérisée en ce que** les deux fentes de serrage (5, 6) sont orientées radialement l'une vers l'autre.

4. Tête d'articulation selon l'une des revendications précédentes, **caractérisée en ce que** le moyen de serrage (8) comporte un boulon fileté (8).

5. Tête d'articulation selon l'une des revendications précédentes, **caractérisée en ce que** la section d'assemblage (41) présente une épaisseur de paroi accrue dans la zone des fentes de serrage (5, 6).

6. Tête d'articulation selon l'une des revendications précédentes, **caractérisée en ce que** l'ouverture de passage (42) a une section d'ouverture non circulaire.

7. Joint universel, comprenant deux têtes d'articulation (4) avec deux bras (43) opposés par rapport à un axe (L), qui dépassent axialement d'une section de liaison (41), un croisillon (31) avec deux paires de tourillons disposées à angle droit l'une par rapport à l'autre, qui sont logés de manière rotative dans les bras (43),
**caractérisé en ce que**
**en ce qu'**au moins l'une des rotules (4) est réalisée selon l'une des revendications précédentes.

8. Arbre de direction (1) pour un système de direction (100) de véhicule automobile, comprenant un tronçon d'arbre (2) qui est fixé de manière solidaire en rotation dans une ouverture de passage (42) dans un tronçon de liaison (41) d'au moins une tête d'articulation (4),
**caractérisé en ce que**
**en ce que** la tête d'articulation (4) est réalisée selon l'une des revendications 1 à 6 précédentes.

9. Système de direction (100) pour un véhicule automobile, comprenant au moins un joint universel (3) selon la revendication 7 et/ou un arbre de direction (1) selon la revendication 8.
